# FASCICULE DE BREVET EUROPEEN

(11) **EP 3 437 305 B1**
(45) Date de publication et mention de la délivrance du brevet: **29.04.2020**
(21) Numéro de dépôt: 17713745.2
(22) Date de dépôt: 09.03.2017
(51) Int. Cl.: H04L 29/08, H04L 12/24, H04L 29/12

(54) **PROCÉDÉ D'ÉTABLISSEMENT D'UNE SESSION DE GESTION ENTRE UN ÉQUIPEMENT ET UN DISPOSITIF DE GESTION DE CET ÉQUIPEMENT**
VERFAHREN ZUR HERSTELLUNG EINER MANAGEMENTSITZUNG ZWISCHEN EINEM ANLAGENGEGENSTAND UND EINER VORRICHTUNG ZUR VERWALTUNG DIESES ANLAGENGEGENSTANDS
METHOD FOR ESTABLISHING A MANAGEMENT SESSION BETWEEN AN ITEM OF EQUIPMENT AND A DEVICE FOR MANAGEMENT OF THIS ITEM OF EQUIPMENT

(30) Priorité: 30.03.2016 FR 1652736
(43) Date de publication de la demande: 06.02.2019
(73) Titulaire: Orange, 75015 Paris (FR)
(72) Inventeur: GERODOLLE, Anne, 38320 Eybens (FR); BEYLER, Olivier, 38130 Echirolles (FR); DOUET, Marc, 38340 Voreppe (FR)
(74) Mandataire: Cabinet Beau de Loménie
(86) Numéro de dépôt international: PCT/FR2017/050532
(87) Numéro de publication internationale: WO 2017/168068

(56) Documents cités:
- WO-A1-2010/076488
- US-A1- 2015 074 245
- John Blackford ET AL: "TR-069 CPE WAN Management Protocol", , 8 janvier 2014 (2014-01-08), pages 1-228, XP055278927, Extrait de l'Internet: URL:https://www.broadband-forum.org/techni cal/download/TR-069_Amendment-5.pdf [extrait le 2016-06-08] cité dans la demande

## Description

### Arrière-plan de l'invention

L'invention se rapporte au domaine général des télécommunications.

Elle concerne plus particulièrement la gestion d'équipements à distance, par exemple par un fournisseur de services.

Dans le cadre de leurs offres de services, les fournisseurs de services tels que les opérateurs de télécommunications sont amenés à équiper leurs clients avec des équipements spécifiques adaptés aux services requis par ces derniers. De tels équipements sont par exemple des boîtiers décodeurs numériques, aussi plus connus sous le nom de Set Top Box en anglais qui permettent aux clients d'accéder via leurs terminaux à des services de télévision et vidéo à la demande, des terminaux de visiophonie ou de voix sur IP (ou VoIP pour Voice Over IP) notamment, etc. Ces équipements installés chez les clients sont généralement connectés à un réseau local (ex. réseau local domestique ou un réseau d'entreprise). Ce réseau local est généralement lui-même relié au réseau Internet par l'intermédiaire d'une passerelle d'accès au réseau Internet aussi appelée passerelle résidentielle.

Pour optimiser la qualité des services offerts à ses clients, un fournisseur de services assure généralement la gestion et la maintenance des divers équipements qu'il a placés chez eux. Cette gestion s'appuie notamment sur l'envoi de messages de mises à jour aux équipements, ainsi que la réception en provenance des équipements d'informations sur leur état.

Pour réaliser cette administration à distance, de nombreux fournisseurs de services utilisent le protocole standardisé CWMP (pour CPE WAN Management Protocol), aussi appelé TR-069 et publié par le Broadband Forum notamment à l'adresse https://www.broadband-forum.org/technical/download/TR-069_Amendment-5.pdf. Ce protocole offre en effet au fournisseur de services, via l'utilisation d'un serveur d'autoconfiguration (ou ACS pour Auto Configuration Server), un ensemble de services de gestion des équipements comprenant des services d'administration, de contrôle, de suivi des performances et de diagnostic, tout en répondant à des exigences de sécurité, d'extensibilité et d'indépendance vis-à-vis du fabricant des équipements.

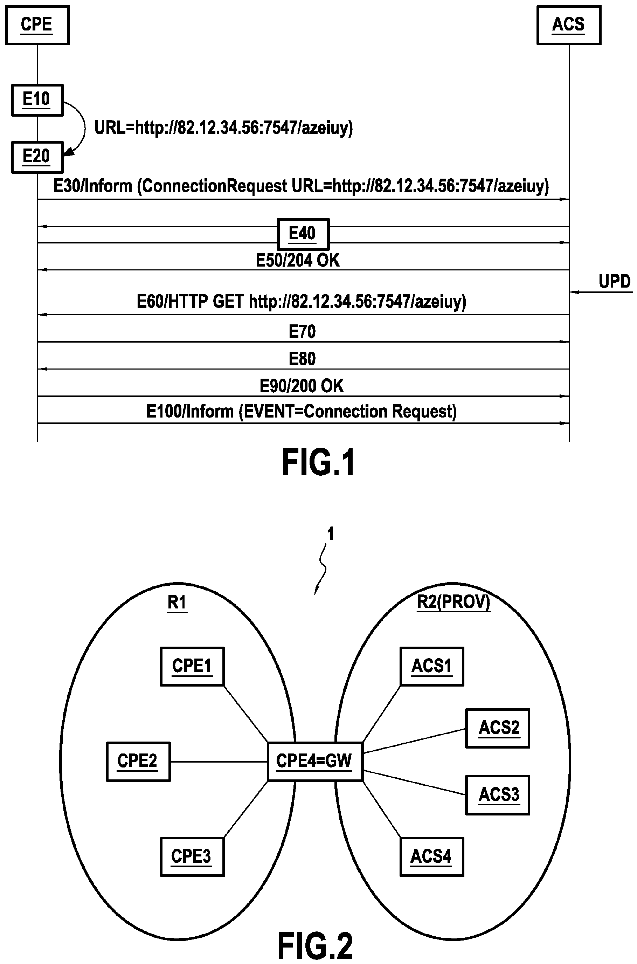

Le protocole CWMP est un protocole s'appuyant sur le protocole de transport http (HyperText Transport Protocol) et sur le protocole SOAP (Simple Object Access Protocol). Les ordres sont émis entre un équipement (ou CPE pour Customer Premices Equipment) et le serveur ACS chargé de sa gestion via le protocole http ou https (HTTP Secure), au cours de sessions. Ces sessions sont toujours initiées par l'équipement. Toutefois, un mécanisme dit de demande d'établissement d'une session ou « Connection Request » en anglais est prévu par le protocole pour permettre au serveur ACS de provoquer de manière asynchrone une session avec l'équipement. Les principales étapes de ce mécanisme sont rappelées brièvement à la **figure 1****.**

De manière générale, lors de chaque démarrage de l'équipement ou CPE (étape E10), celui-ci ouvre un serveur http sur une adresse ou URL (Uniform Resource Locator) (étape E20). Cette URL comprend l'adresse IP (Internet Protocol) de l'équipement et le port sur lequel il peut être joint dans le réseau local auquel il appartient, en particulier pour mettre en œuvre une procédure de « connection request ». Par exemple, URL = http://82.12.34.56:7547/azeiuy.

Puis le CPE envoie un message CWMP Inform au serveur ACS auquel il est rattaché et qui assure sa gestion, autrement dit son administration (étape E30). Dans ce message, le CPE indique son modèle de données qui comprend notamment l'URL du serveur http ouvert à l'étape E20, sur laquelle le serveur ACS peut le contacter. On note qu'en cas de changement de cette URL, le CPE notifie le serveur ACS de sorte que le serveur ACS ait toujours à sa disposition une URL à jour.

Un dialogue s'ensuit entre le CPE et le serveur ACS dans la session ainsi établie (étape E40), qui se clôture par un message 204 OK envoyé par le serveur ACS au CPE (étape E50).

On suppose maintenant que le fournisseur de services souhaite effectuer une opération de mise à jour sur le CPE par l'intermédiaire du serveur ACS. Le mécanisme de « connection request » prévu par le protocole CWMP lui permettant cette opération consiste à émettre à destination du CPE une requête http GET sur l'URL fournie par le CPE (étape E60). De façon connue dans le protocole http, la méthode GET permet de demander une ressource.

S'ensuit en réponse à la requête du serveur ACS une authentification du serveur ACS par le CPE (étape E70) au cours de laquelle le serveur ACS fournit un identifiant et un mot de passe préalablement partagés entre le CPE et le serveur ACS (étape E80). Un message 200 OK est émis par le CPE à destination du serveur ACS en cas de succès de l'authentification (E90).

Suite à cet échange et à l'authentification positive du serveur ACS, le CPE répond à la demande d'établissement d'une session de gestion du serveur ACS en tentant d'initier une session avec ce dernier, et envoie un message Inform au serveur ACS contenant un événement Event = ConnectionRequest (E100). Dès lors, le serveur ACS peut administrer à distance le CPE via la session ainsi établie et lui demander différentes actions par le biais de commandes RPC (Remote Procedure Call) en vue de sa mise à jour. Par exemple, il peut lui demander de télécharger un fichier de configuration, de retourner la valeur d'un de ses paramètres, etc.

Autrement dit, selon ce mécanisme de « connection request », le serveur ACS requiert une connexion du CPE en visitant une URL fournie par le CPE et après s'être authentifié auprès du CPE. Ce mécanisme suppose donc une joignabilité IP directe du CPE par le serveur ACS. Il n'est donc pas directement applicable lorsque le CPE est situé derrière une entité de traductions d'adresses aussi appelée NAT (Network Address Translation) ou derrière un pare-feu protégeant le réseau local auquel le CPE appartient.

L'annexe G du protocole CWMP définit un mécanisme permettant d'atteindre des équipements CPE qui sont connectés derrière une entité NAT. Ce mécanisme dit de traversée de NAT s'appuie sur le protocole STUN (Simple Traversal of UDP through NATs) et sur le protocole UDP (User Datagram Protocol). Il prévoit le maintien d'une connexion ouverte avec un serveur STUN via l'envoi de messages périodiques à ce serveur, cette connexion étant alors utilisée par le serveur ACS pour administrer le CPE.

Toutefois ce mécanisme nécessite la présence d'un client STUN au niveau de l'équipement et la présence d'un serveur STUN au niveau du serveur ACS du fournisseur de service, et les inventeurs ont constaté qu'en pratique, très peu de CPE l'implémentent.

Par ailleurs, ce mécanisme s'appuie sur le maintien d'une connexion permanente entre l'équipement et son serveur ACS ce qui peut poser des problèmes de passage à l'échelle côté serveur, notamment par rapport au nombre de ports ouverts pour maintenir de telles connexions avec tous les équipements gérés par le serveur ACS le cas échéant, et en terme de bande passante requise.

Le document WO2010/076488 propose un procédé alternatif de gestion d'un équipement à distance, s'appuyant sur l'utilisation d'un équipement intermédiaire assurant la sécurité du réseau local du CPE en bloquant les messages non sollicités par le CPE reçus d'un réseau extérieur auquel appartient notamment le serveur ACS du fournisseur de services. Un tel équipement intermédiaire est typiquement une passerelle résidentielle réalisant l'interface entre le réseau local du CPE et le réseau du serveur ACS.

Conformément au procédé proposé dans ce document, si la passerelle résidentielle détecte qu'un message non sollicité adressé au CPE est une demande d'établissement d'une session de gestion contenant une adresse IP, un port et un appel de fonction à distance (i.e. une commande RPC destinée à être exécutée par le CPE), il génère une deuxième demande d'établissement de la session de gestion qu'il transmet au CPE. Celui-ci en réponse à cette deuxième demande se connecte à son serveur ACS.

La solution proposée par le document WO2010/076488 s'appuie donc sur une adaptation nécessaire de la passerelle résidentielle avec une méthode RPC spécifique pour que celle-ci soit en mesure de détecter une demande d'établissement d'une session de gestion destinée au CPE et provenant du réseau extérieur, et de générer et transmettre elle-même une demande d'établissement d'une session de gestion au CPE.

Le document US 2015/074245 est un autre document pertinent de l'état de l'art.

### Objet et résumé de l'invention

L'invention remédie notamment aux inconvénients de l'état de la technique précité en proposant un procédé d'établissement d'une session de gestion entre un premier équipement appartenant à un premier réseau de communication et un premier dispositif de gestion du premier équipement appartenant à un second réseau de communication distinct du premier réseau de communication, ce procédé comprenant :
- une étape d'établissement d'une session de gestion entre un second équipement du premier réseau, joignable depuis le second réseau, et un second dispositif de gestion de ce second équipement appartenant au second réseau ;
- une étape d'envoi par le second dispositif de gestion au second équipement, au cours de la session de gestion établie, d'une requête demandant au second équipement de télécharger un contenu à une adresse fournie par le premier équipement pour établir une session de gestion avec ce premier équipement ;
- une étape d'exécution de la demande de téléchargement par le second équipement ;
- en réponse à cette étape d'exécution, une étape d'initiation d'une connexion par le premier équipement avec le premier dispositif de gestion en vue d'établir une session de gestion entre le premier équipement et le premier dispositif de gestion.

Ainsi, l'invention propose, pour pallier à la non joignabilité du premier équipement par son (premier) dispositif de gestion, d'utiliser un équipement intermédiaire joignable, qui va déclencher, par son action sur le premier équipement, l'initiation d'une connexion entre le premier équipement et son dispositif de gestion, permettant ainsi l'établissement d'une session de gestion entre eux. Cet équipement intermédiaire, ou second équipement au sens de l'invention, qui sert de relai à proprement parler entre le premier équipement et son dispositif de gestion, peut avantageusement :
- d'une part, joindre le premier équipement, car il se trouve dans le même réseau local que celui-ci ; et
- d'autre part, être joint par son propre (second) dispositif de gestion selon des mécanismes classiques prévus aujourd'hui dans les protocoles d'administration à distance, ce qui permet au second dispositif de lui commander d'accéder au premier dispositif via l'adresse de connexion spécifiée préalablement par celui-ci.

La commande sur laquelle s'appuie l'invention pour déclencher la connexion du deuxième équipement au premier équipement est une commande de téléchargement d'un contenu, implémentée aujourd'hui par l'ensemble des équipements destinés à être gérés à distance. Une telle commande est par exemple la commande Download prévue dans le protocole CWMP.

L'invention propose donc un mécanisme très simple pour établir une session de gestion avec un équipement non joignable, se trouvant par exemple derrière une entité NAT du premier réseau ou un pare-feu protégeant le premier réseau et contrôlant l'accès au premier réseau. Ce mécanisme, qui s'appuie sur l'usage détourné d'une commande de téléchargement standard faisant référence à un contenu, par exemple fictif (i.e. qui n'existe pas réellement au niveau du premier équipement), est complétement transparent pour les équipements du premier réseau puisqu'il s'appuie sur des méthodes déjà implémentées usuellement par ces équipements. L'invention ne requiert donc aucune modification à proprement parler du premier équipement ni du second équipement qui sert de relai. Elle permet ainsi de réduire les coûts d'administration de tels équipements.

En outre, l'invention s'applique à tout type d'équipements pouvant être administrés à distance, et notamment à ceux qui ne mettent pas en œuvre de mécanisme particulier de traversée de NAT ou de pare-feu. Ceci est particulièrement avantageux pour le fournisseur de services ou l'opérateur gérant ces équipements en termes de coût mais également d'impact environnemental. Il suffit dès lors pour le fournisseur de services, de s'assurer qu'un seul équipement du premier réseau est joignable depuis le second réseau dans lequel se trouve son dispositif de gestion et sous le contrôle du fournisseur de services, ce qui est typiquement le cas généralement des passerelles résidentielles (ou passerelles d'accès) couramment utilisées dans les réseaux domestiques ou d'entreprise. En variante, d'autres équipements peuvent être rendus joignables par le fournisseur de services, par exemple du fait que ces équipements sont adaptés à mettre en œuvre un mécanisme de traversée d'une entité de traductions d'adresses du premier réseau ou d'un dispositif de sécurité apte à contrôler l'accès au premier réseau. De tels mécanismes sont par exemple le mécanisme prévu à l'annexe G du protocole CWMP s'appuyant sur le protocole STUN, ou le mécanisme prévu à l'appendice IV du protocole CWMP s'appuyant sur le protocole UPnP IGD (Internet Gateway Device) ou encore le mécanisme prévu à l'annexe K du protocole CWMP s'appuyant sur le protocole XMPP (Extensible Messaging and Presence Protocol).

On note que l'invention s'applique aussi bien quand le premier et le second équipement sont gérés par des dispositifs de gestion distincts ou par le même dispositif de gestion (i.e. le premier dispositif de gestion et le second dispositif de gestion sont un seul et même dispositif de gestion).

Dans un mode particulier de réalisation, la requête envoyée par le second dispositif de gestion au second équipement comprend en outre des informations d'authentification auprès du premier équipement, ces informations étant utilisées par le second équipement au cours de l'étape d'exécution.

Ceci permet de se connecter au premier équipement lorsque celui-ci est protégé par un mécanisme d'authentification. C'est par exemple le cas couramment lorsque le protocole CWMP est utilisé.

Dans un autre mode de réalisation, le procédé d'établissement comprend en outre une étape d'identification du second équipement auquel est envoyée la requête à partir d'une information transmise par le premier équipement.

Les informations permettant d'identifier le second équipement peuvent être obtenues du premier équipement via une procédure spécifiquement prévue à cet effet ou être déduites de messages échangés entre le premier équipement et son dispositif de gestion, par exemple lors du démarrage du premier équipement.

Dans un autre mode de réalisation, le procédé selon l'invention comprend en outre une étape préalable de détection que le premier équipement n'est pas joignable directement par le premier dispositif de gestion, cette étape de détection déclenchant la mise en œuvre des étapes d'établissement d'une session de gestion entre le second équipement et le second dispositif de gestion, et d'envoi d'une requête par le second dispositif de gestion au second équipement.

Ainsi, dans ce mode de réalisation, le procédé selon l'invention n'est mis en œuvre que lorsque l'on détecte que le premier équipement n'est pas joignable, une procédure classique d'établissement d'une session de gestion asynchrone étant mise en œuvre sinon entre le premier équipement et son dispositif de gestion. De cette sorte, on ne sollicite le second dispositif et son dispositif de gestion que lorsque cela est nécessaire et qu'une connexion directe entre le premier équipement et son dispositif de gestion n'est pas possible.

Comme mentionné précédemment l'invention s'appuie sur un second équipement du premier réseau joignable depuis le second réseau dans lequel se trouve son dispositif de gestion et sur ledit dispositif de gestion du second équipement.

L'invention vise donc également un procédé de gestion d'un équipement, dit second équipement, appartenant à un premier réseau de communication et joignable depuis un second réseau de communication, ce procédé de gestion étant destiné à être mis en œuvre par un dispositif de gestion du second équipement, dit second dispositif de gestion, et appartenant au second réseau, et comprenant :
- une étape d'obtention d'une adresse fournie par un équipement du premier réseau, dit premier équipement, permettant d'établir une session de gestion avec ce premier équipement ;
- une étape d'établissement d'une session de gestion avec le second équipement ; et
- une étape d'envoi au second équipement, au cours de la session de gestion établie, d'une requête demandant au second équipement de télécharger un contenu à ladite adresse.

Corrélativement, elle concerne aussi un dispositif de gestion d'un équipement, dit second équipement, appartenant à un premier réseau de communication et joignable depuis un second réseau de communication, ledit dispositif de gestion du second équipement appartenant au second réseau et comprenant :
- un module d'obtention, configuré pour obtenir une adresse fournie par un équipement du premier réseau, dit premier équipement, permettant d'établir une session de gestion avec ce premier équipement ;
- un module d'établissement, configuré pour établir une session de gestion avec le second équipement ; et
- un module d'envoi, configuré pour envoyer au second équipement, au cours de la session de gestion établie, une requête demandant au second équipement de télécharger un contenu à ladite adresse.

Le procédé de gestion et le dispositif de gestion bénéficient des mêmes avantages que ceux cités précédemment pour le procédé d'établissement d'une session de gestion.

Dans un mode particulier de réalisation, les différentes étapes du procédé de gestion sont déterminées par des instructions de programmes d'ordinateurs.

En conséquence, l'invention vise aussi un programme d'ordinateur sur un support d'informations, ce programme étant susceptible d'être mis en œuvre dans un dispositif de gestion ou plus généralement dans un ordinateur, ce programme comportant des instructions adaptées à la mise en œuvre des étapes d'un procédé de gestion tel que décrit ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations ou d'enregistrement lisible par un ordinateur, et comportant des instructions d'un programme d'ordinateur tel que mentionné ci-dessus.

Le support d'informations ou d'enregistrement peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy dise) ou un disque dur.

D'autre part, le support d'informations ou d'enregistrement peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations ou d'enregistrement peut être un circuit intégré dans lequel le programme est incorporé, le circuit étant adapté pour exécuter ou pour être utilisé dans l'exécution du procédé en question.

Selon un autre aspect, l'invention vise également un système de communication comprenant :
- un premier équipement appartenant à un premier réseau de communication ;
- un premier dispositif de gestion du premier équipement appartenant à un second réseau de communication distinct du premier réseau ;
- un second équipement appartenant au premier réseau et joignable depuis le second réseau ;
- un second dispositif de gestion du second équipement conforme à l'invention ;
le second équipement comprenant :
- un module d'établissement configuré pour établir une session de gestion avec le second dispositif de gestion ;
- un module de réception, apte à recevoir en provenance du dispositif de gestion, au cours de la session de gestion établie, une requête lui demandant de télécharger un contenu fictif à une adresse fournie par le premier équipement pour établir une session de gestion avec ce premier équipement ; et
- un module d'exécution apte à exécuter la demande de téléchargement.

Le second équipement est par exemple une passerelle d'accès du premier réseau au second réseau (ex. passerelle résidentielle) ou un équipement du premier réseau mettant en œuvre un mécanisme de traversée d'une entité de traduction d'adresses du premier réseau ou d'un dispositif de sécurité apte à contrôler l'accès au premier réseau.

On peut également envisager, dans d'autres modes de réalisation, que le procédé d'établissement, le procédé de gestion, le dispositif de gestion et le système de communication selon l'invention présentent en combinaison tout ou partie des caractéristiques précitées.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 rappelle brièvement les étapes du mécanisme « connection request » prévu par le protocole CWMP (état de la technique) ;
- la figure 2 représente schématiquement un système de communication selon l'invention, dans un mode particulier de réalisation ;
- la figure 3 représente schématiquement l'architecture matérielle d'un dispositif de gestion selon l'invention et d'un équipement du système de communication de la figure 2 ;
- la figure 4 illustre les principales étapes d'un procédé d'établissement selon l'invention dans un mode particulier de réalisation dans lequel il est mis en œuvre par le système de communication de la figure 2.

### Description détaillée de l'invention

La **figure 2** représente, dans son environnement, un système de communication 1 conforme à l'invention, dans un mode particulier de réalisation.

Le système de communication 1 comprend plusieurs équipements ou dispositifs (CPE), connectés entre eux via un réseau de communication local ou réseau de communication d'entreprise R1. Dans l'exemple envisagé à la figure 2, les équipements du réseau R1 comprennent un terminal de voix sur IP CPE1, un terminal de visiophonie CPE2, un boîtier décodeur numérique (Set Top Box) CPE3 et une passerelle résidentielle CPE4 (aussi appelée passerelle d'accès du réseau R1). Le réseau local R1 est par ailleurs un réseau WLAN (Wireless Local Area Network).

Toutefois, aucune limitation n'est attachée à la nature ou au nombre d'équipements dans le réseau R1 ni à la nature de ce réseau. Il peut s'agir par exemple alternativement d'un réseau filaire ou LAN.

Dans le mode de réalisation illustré à la figure 2, chacun des équipements CPE1, CPE2, CPE3 et CPE4 est administré par un dispositif de gestion distinct conforme à l'invention, par l'intermédiaire du protocole CWMP ou TR069. Autrement dit, l'équipement CPE1 est géré par un dispositif de gestion ou serveur ACS ACS1, l'équipement CPE2 est géré par un dispositif de gestion ou serveur ACS ACS2, l'équipement CPE3 est géré par un dispositif de gestion ou serveur ACS ACS3, et l'équipement CPE4 est géré par un dispositif de gestion ou serveur ACS ACS4. La gestion de chaque équipement par un serveur ACS comprend notamment la mise à jour des logiciels (ex. firmware) de l'équipement, le suivi de son état et de ses performances, etc. On suppose ici que tous les serveurs ACS1-ACS4 sont administrés par un même opérateur ou fournisseur de services PROV, et appartiennent à un réseau R2 du fournisseur de services, distinct du réseau local R1. Le réseau R2 est par exemple un réseau WAN (Wide Area Network), le réseau Internet, etc.

Dans un autre mode de réalisation, tous les équipements sont gérés par un unique serveur ACS, ou plusieurs équipements sont gérés par un même serveur ACS, etc.

La passerelle résidentielle CPE4 réalise l'interface entre le réseau local R1 et le réseau WAN R2. Elle met en œuvre, dans le mode de réalisation décrit ici, un mécanisme de traduction d'adresses ou NAT, autrement dit, elle met en correspondance des adresses IP et ports internes (privés) et non routables du réseau local R1 (c'est-à-dire non joignables par un équipement appartenant à un réseau extérieur au réseau local R1) avec un ensemble d'adresses IP externes (publiques) et routables, c'est-à-dire ici joignables depuis un réseau extérieur, et typiquement depuis le réseau R2. Un tel mécanisme est connu en soi et non décrit plus en détail ici.

En raison de la mise en œuvre de ce mécanisme de traduction d'adresses par la passerelle résidentielle CPE4, les équipements CPE1, CPE2 et CPE3 appartenant au réseau R1 ne sont pas joignables directement par un autre dispositif n'appartenant pas au réseau R1. Autrement dit, ils ne sont pas joignables directement sur leurs ports et adresses IP par leurs dispositifs de gestion respectifs ACS1, ACS2 et ACS3 (pas de joignabilité IP). On suppose par ailleurs, que les équipements CPE1, CPE2 et CPE3 n'implémentent aucun mécanisme particulier de traversée de NAT, tel que par exemple le mécanisme prévu à l'annexe G du protocole TR069.

On suppose ici que la passerelle résidentielle CPE4, bien qu'appartenant au réseau R1, est en revanche joignable par les dispositifs du réseau R2. Elle dispose, en raison de sa fonction d'interface entre les réseaux R1 et R2 d'une adresse IP et d'un port publics joignables par les dispositifs du réseau R2.

Pour permettre l'administration des équipements CPE1, CPE2, CPE3, en l'absence de joignabilité IP, le système de communication 1 est configuré pour mettre en œuvre un procédé de gestion selon l'invention qui s'appuie notamment sur l'équipement (ou passerelle résidentielle) CPE4, joignable depuis le réseau R2, et sur le dispositif de gestion ou serveur ACS4 de cet équipement CPE4.

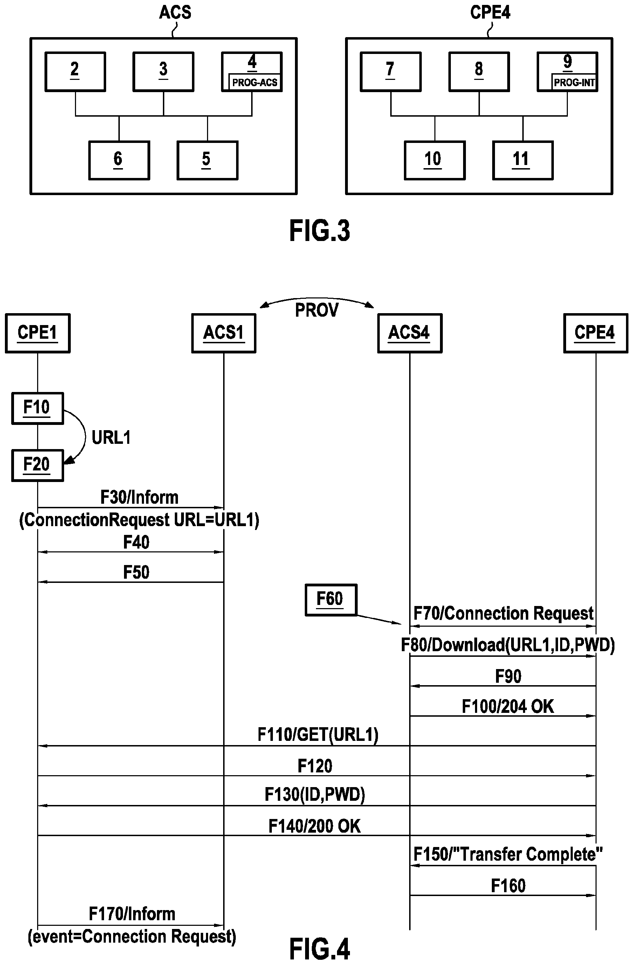

Dans le mode de réalisation décrit ici, chaque serveur ACS du réseau R2 a l'architecture matérielle d'un ordinateur. Il comprend notamment, comme illustré à la **figure 3****,** un processeur 2, une mémoire vive 3, une mémoire morte 4, une mémoire non volatile 5, et un module de communication 6. Le module de communication 6 permet à chaque serveur ACS de communiquer avec d'autres équipements du réseau R2 du fournisseur de services (et notamment avec les autres serveurs ACS) ainsi qu'avec les équipements du réseau R1, via la passerelle résidentielle CPE4, et notamment avec l'équipement qu'il administre. Ce module comprend par exemple une carte réseau.

La mémoire morte 4 de chaque serveur ACS constitue un support d'enregistrement conforme à l'invention, lisible par le processeur 2 et sur lequel est enregistré un programme d'ordinateur PROG-ACS conforme à l'invention, comportant des instructions pour l'exécution des étapes d'un procédé de gestion selon l'invention.

Ce programme d'ordinateur PROG-ACS définit de façon équivalente des modules fonctionnels et logiciels ici, et configurés pour mettre en œuvre les étapes du procédé de gestion selon l'invention. Ces modules fonctionnels s'appuient ou commandent les éléments matériels 2-6 du serveur ACS. Ils comprennent notamment ici :
- un module d'obtention, configuré pour obtenir une adresse (URL) fournie par un équipement du réseau R1 non joignable directement par son dispositif de gestion (ex. équipement CPE1, CPE2, ou CPE3), et qui permet d'établir une session de gestion avec cet équipement ;
- un module d'établissement, configuré pour établir une session de gestion avec un équipement dit relai du réseau R1 qu'il administre et qu'il est en mesure de joindre directement (ex. passerelle CPE4) ;
- un module d'envoi, configuré pour envoyer à cet équipement relai, au cours de la session de gestion établie, une requête (ex. requête utilisant la méthode http Download implémentée par tout équipement supportant le protocole CWMP) lui demandant de télécharger un contenu à l'adresse fournie par l'équipement du réseau R1 non joignable.

Ces différents modules commandent notamment le module de communication 6 du serveur ACS. Leurs fonctions sont décrites plus en détail ultérieurement en référence à la figure 4 et aux étapes du procédé d'établissement d'une session de gestion selon l'invention.

Par ailleurs, dans le mode de réalisation décrit ici, l'équipement (passerelle) CPE4 a également l'architecture matérielle d'un ordinateur. Il comprend notamment, comme illustré à la **figure 3****,** un processeur 7, une mémoire vive 8, une mémoire morte 9, une mémoire non volatile 10, et un module de communication 11. Le module de communication 11 permet à la passerelle CPE4 de communiquer avec des équipements du réseau R2 du fournisseur de services (et notamment avec son dispositif de gestion ACS4) ainsi qu'avec les autres équipements du réseau R1 auquel elle appartient. Ce module comprend par exemple une carte réseau, ainsi qu'une entité de traduction d'adresses NAT comme mentionné précédemment.

La mémoire morte 9 de l'équipement CPE4 constitue un support d'enregistrement, lisible par le processeur 7 et sur lequel est enregistré un programme d'ordinateur PROG-INT définissant divers modules fonctionnels et logiciels, qui s'appuient ou commandent les éléments matériels 7-11 de l'équipement CPE4. Ces modules comprennent notamment ici :
- un module d'établissement configuré pour établir une session de gestion avec le dispositif de gestion ACS4 de l'équipement CPE4 ;
- un module de réception, apte à recevoir en provenance du dispositif de gestion ACS4, au cours de la session de gestion établie, une requête (ex. requête utilisant la méthode http Download implémentée par tout équipement supportant le protocole CWMP) lui demandant de télécharger un contenu à une adresse (URL) fournie par un équipement du réseau R1 non joignable (ex. équipement CPE1, CPE2 ou CPE3) pour établir une session de gestion avec cet équipement ;
- un module d'exécution apte à exécuter la demande de téléchargement.

Les modules d'établissement, de réception et d'envoi de l'équipement CPE4 commandent notamment le module de communication 11 de l'équipement CPE4. Leurs fonctions sont décrites plus en détail ultérieurement en référence aux étapes du procédé d'établissement d'une session de gestion selon l'invention.

Nous allons maintenant décrire plus en détail, en référence à la **figure 4****,** les principales étapes d'un procédé d'établissement d'une session de gestion selon l'invention. A titre illustratif, on s'intéresse, dans l'exemple envisagé à la figure 4, à l'établissement d'une session de gestion entre l'équipement CPE1 du réseau R1 et son dispositif de gestion ou serveur ACS ACS1. Toutefois, cette hypothèse n'est en aucun cas limitative, le procédé d'établissement selon l'invention pouvant s'appliquer indifféremment à n'importe lequel des équipements du réseau R1 qui n'est pas joignable directement par son dispositif de gestion (autrement dit, dans l'exemple envisagé à la figure 2, aux équipements CPE2 et CPE3 également).

Dans le mode de réalisation décrit ici, le procédé d'établissement d'une session de gestion selon l'invention est précédé par une phase préliminaire « classique » d'établissement d'une session entre l'équipement CPE1 et son dispositif de gestion ACS1, ayant lieu au démarrage de l'équipement CPE1. Cette phase préliminaire est similaire à celle décrite précédemment en référence à la figure 1.

Ainsi, lors du démarrage de l'équipement CPE1 (étape F10), celui-ci ouvre un serveur http sur une adresse URL1 (étape F20). Ce serveur est protégé ici par un identifiant ID et un mot de passe PWD, partagés avec le dispositif de gestion ACS1. Aucune limitation n'est attachée à la façon dont ce partage est effectué (identifiant et mot de passe codés en dur sur les deux dispositifs, échange sécurisé, etc.). L'adresse URL1 est une URL comprenant l'adresse IP (Internet Protocol) de l'équipement CPE1 et le port sur lequel il peut être joint dans le réseau local R1, après authentification basée sur l'identifiant ID et sur le mot de passe PWD. L'adresse URL1 est par exemple http://192.168.1.12:7547/azeiuy.

Puis l'équipement CPE1 envoie un message CWMP Inform à son dispositif de gestion ACS1 (étape F30), dans lequel il indique son modèle de données et notamment l'adresse URL1 du serveur http ouvert dans le réseau R1 à l'étape F20 sur laquelle le dispositif de gestion ACS1 peut le contacter.

Un dialogue s'ensuit entre l'équipement CPE1 et son dispositif de gestion ACS1 dans la session ainsi établie.

Durant ce dialogue, dans le mode de réalisation décrit ici, le dispositif de gestion ACS1 obtient de l'équipement CPE1 des informations sur la passerelle résidentielle CPE4 qui réalise l'interface entre le réseau local R1 et le réseau R2 du dispositif de gestion ACS1 (étape F40). Ces informations sont destinées à permettre notamment au dispositif de gestion ACS1 d'identifier la passerelle résidentielle CPE4. Le dispositif de gestion ACS1 obtient ces informations de l'équipement CPE1 par exemple en mettant en œuvre une procédure telle que définie à l'annexe F du protocole CWMP et détaillée dans le document intitulé « TR-069 : CPE WAN Management Protocol v1.4 », Novembre 2013 (ci-après document D1), disponible à l'adresse https://www.broadband-forum.org/technical/download/TR-069_Amendment-5.pdf. Cette procédure s'appuie sur l'utilisation d'une méthode « GatewayInfo ».

En variante, si l'équipement CPE1 et/ou le dispositif de gestion ACS1 n'implémentent pas l'annexe F du protocole CWMP, le dispositif de gestion ACS1 peut détecter l'identité de la passerelle résidentielle CPE4 à partir du message Inform qu'il a reçu à l'étape F30 de l'équipement CPE1. Ce message transitant en effet par la passerelle CPE4, le dispositif de gestion ACS1 est en mesure d'identifier à partir de celui-ci une adresse de joignabilité (adresse IP et port publics) de la passerelle CPE4.

Dans une autre variante encore, il peut détecter qu'il reçoit les messages de l'équipement CPE1 en provenance d'une même adresse IP qu'un autre équipement CPE qu'il gère et pour lequel il connaît la passerelle à laquelle cet équipement est associé.

On note que le dispositif de gestion ACS1 ou le fournisseur de services PROV administrant le dispositif de gestion ACS1 est en mesure à partir des informations recueillies sur la passerelle CPE4 et des adresses de transport contenues dans les messages échangés avec l'équipement CPE1, de détecter que la passerelle résidentielle CPE4 met en œuvre un mécanisme de traduction d'adresses NAT, et qu'en raison de la présence de ce mécanisme, l'équipement CPE1 n'est pas directement joignable sur son adresse URL1 par son dispositif de gestion ACS1. On souligne ici que cette étape préalable de détection déclenche la mise en œuvre des étapes d'établissement d'une session de gestion entre la passerelle CPE4 et son dispositif de gestion ACS4, et d'envoi d'une requête par le dispositif de gestion ACS4 à la passerelle CPE4, décrites ultérieurement.

La session de communication entre l'équipement CPE1 et le dispositif de gestion ACS1 se clôture ensuite par un message 204 OK envoyé par le dispositif de gestion ACS1 à l'équipement CPE1 (étape F50).

On suppose maintenant qu'une intervention (ex. mise à jour de firmware ou communication) doit être réalisée par le fournisseur de services PROV sur l'équipement CPE1 (étape F60). L'équipement CPE1 n'étant pas directement joignable sur son adresse URL1, le dispositif de gestion ACS1 ne peut avoir recours pour établir une session de gestion asynchrone avec l'équipement CPE1 à une procédure classique de « connection request » telle qu'elle est prévue par le protocole CWMP. L'intervention souhaitée par le fournisseur de services PROV va donc déclencher l'exécution du procédé d'établissement selon l'invention.

Ce procédé s'appuie ici sur l'équipement CPE4 et sur le dispositif de gestion ACS4. Plus précisément, il s'agit conformément à l'invention, de bénéficier de la joignabilité de l'équipement CPE4 par son dispositif de gestion ACS4 du fait de sa fonction de passerelle entre les réseaux R1 et R2, et de la joignabilité de l'équipement CPE1 par l'équipement CPE4 pour déclencher une connexion de l'équipement CPE1 avec son dispositif de gestion ACS1. Autrement dit, l'équipement CPE4 sert ici de relai entre l'équipement CPE1 et son dispositif de gestion ACS1 pour permettre l'établissement d'une session de gestion asynchrone entre les deux. Le procédé d'établissement selon l'invention s'appuie donc à cette fin sur le procédé de gestion selon l'invention mis en œuvre par le dispositif de gestion ACS4 et la réponse correspondante de l'équipement CPE4.

Plus particulièrement, suite à l'étape F60, le dispositif de gestion ACS4 (activé par exemple par un message du dispositif de gestion ACS1 ou directement par le fournisseur de services PROV) met en œuvre une procédure d'établissement d'une session de gestion avec l'équipement CPE4 (étape F70). Il procède à cet effet conformément à la procédure de « connection request » décrite dans le document D1 précité décrivant le protocole CWMP et rappelée brièvement précédemment en référence à la figure 1. Aucune difficulté ne se pose pour établir cette session de gestion, l'équipement CPE4 étant joignable directement par son dispositif de gestion ACS4.

Une fois la session de gestion établie entre l'équipement CPE4 et son dispositif de gestion ACS4, le dispositif de gestion ACS4 envoie à l'équipement CPE4 une requête lui demandant de télécharger un contenu à l'adresse URL1 fournie précédemment au dispositif de gestion ACS1 par l'équipement CPE1 (étape F80). L'adresse URL1 a été obtenue préalablement par le dispositif de gestion ACS4 soit directement du dispositif de gestion ACS1, soit par l'intermédiaire du fournisseur de services PROV. Par ailleurs, on suppose également ici que lors de la fourniture de l'adresse URL1, le dispositif de gestion ACS4 a également obtenu l'identifiant ID et le mot de passe PWD requis pour s'authentifier auprès de l'équipement CPE1.

Dans le mode de réalisation décrit ici, la requête envoyée par le dispositif de gestion ACS4 s'appuie avantageusement sur la méthode RPC Download. Cette méthode est mise en œuvre par tout équipement conforme au protocole CWMP. Elle est classiquement utilisée par un serveur ACS pour demander à l'équipement qu'il administre de télécharger un contenu multimédia ou un fichier spécifique de mise à jour et/ou un fichier de configuration. Une telle méthode est décrite en détail au paragraphe A.3.2.8 de l'annexe A du document D1.

La méthode Download prend en entrée différents arguments ou paramètres, à savoir :
- une clé de commande « CommandKey », qui est une chaîne de caractères que l'équipement utilise pour faire référence à un téléchargement particulier, notamment lorsqu'il confirme l'exécution du téléchargement ;
- un type de fichier « FileType », représenté par un entier suivi d'un espace suivi d'une description du type de fichier. Seules cinq valeurs sont définies par le protocole CWMP dans le document D1 :
   ∘ « 1 : Firmware Upgrade Image »
   ∘ « 2 : Web Content » ;
   ∘ « 3 : Vendor Configuration File » ;
   ∘ « 4 : Tone File » ; et
   ∘ « 5 : Ringer File» ;
- une adresse « URL » spécifiant la localisation du contenu à télécharger ;
- un nom d'utilisateur « Username » utilisé par l'équipement pour s'authentifier auprès du serveur auprès duquel il doit télécharger le contenu. Si aucune authentification n'est requise, ce champ est laissé vide ;
- un mot de passe « Password » utilisé par l'équipement pour s'authentifier auprès du serveur auprès duquel il doit télécharger le contenu. Si aucune authentification n'est requise, ce champ est laissé vide ;
- un délai « DelaySeconds » exprimé en secondes et spécifiant le délai entre la réception de la requête de téléchargement et l'exécution de ce téléchargement par l'équipement.

Il est ici souligné que d'autres valeurs de type de fichier peuvent également être utilisées pour certains équipements CPE.

Dans l'exemple envisagé ici, la requête Download émise par le dispositif de gestion ACS4 à destination de l'équipement CPE4 contient les paramètres suivants :
- « CommandKey » est fixée à une valeur quelconque choisie par le dispositif de gestion ACS4 ;
- « FileType » est fixé à une valeur acceptée par l'équipement CPE4 ;
- «URL» est fixée à la valeur URL1 ;
- les informations d'authentification « Username » et « Password » sont fixées respectivement à l'identifiant ID et au mot de passe PWD ; et
- « DelaySeconds » est fixé à 0 pour une exécution immédiate. On note toutefois que d'autres valeurs sont possibles, préférentiellement faibles pour garantir une exécution rapide du téléchargement par la passerelle CPE4.

En variante, si le serveur ouvert par l'équipement CPE1 lors de l'étape E20 n'est pas pas protégé par un identifiant et un mot de passe, les champs « Username » et « Password » sont laissés vides.

On note que la requête Download émise par le dispositif de gestion ACS4 peut viser un contenu qui n'a pas réellement besoin d'exister au niveau de l'équipement CPE1, autrement dit cette requête peut porter sur le téléchargement d'un contenu qu'on peut qualifier de « fictif ». Il s'agit en effet uniquement par le biais du téléchargement exécuté par l'équipement CPE4 sur réception de cette requête de déclencher la connexion de l'équipement CPE1 à son dispositif de gestion ACS1.

L'équipement CPE4 reçoit la requête Download émise par son dispositif de gestion ACS4 et accuse réception de cette requête (étape F90). Lorsque le dispositif de gestion ACS4 n'a plus d'opérations à effectuer auprès de l'équipement CPE4, il envoie alors un message 204 OK à l'équipement CPE4 clôturant la session de gestion établie précédemment (étape F100).

Suite à la réception de la requête Download, l'équipement CPE4 exécute le téléchargement demandé par le dispositif de gestion ACS4, en utilisant les paramètres indiqués dans la requête (étape F110). Cette exécution est immédiate ici, le délai spécifié dans le paramètre « DelaySeconds » de la requête étant fixé à 0s.

Cette exécution est réalisée via l'envoi par l'équipement CPE4 à l'équipement CPE1 auquel se réfère l'adresse URL1, d'une requête de téléchargement http Get visant l'adresse URL1. On note que l'équipement CPE1 et l'équipement CPE4 appartenant au même réseau local R1, l'équipement CPE4 ne rencontre aucune difficulté pour joindre l'équipement CPE1 (il n'y a typiquement aucune traversée de NAT au sein du réseau R1 de sorte que tous les équipements sont joignables par les autres équipements appartenant du réseau).

La réception de la requête Get par l'équipement CPE1 déclenche, dans le mode de réalisation décrit ici, une procédure d'authentification de l'équipement CPE4 (étape F120), au cours de laquelle l'équipement CPE4 fournit à l'équipement CPE1 les informations d'authentification requises à savoir l'identifiant ID et le mot de passe PWD reçus du dispositif de gestion ACS4 dans la requête Download (étape F130).

L'authentification de l'équipement CPE4 étant réalisée avec succès, l'équipement CPE1 envoie un message 200 OK à l'équipement CPE4 (étape F140).

On note que si le contenu visé par la requête Download n'existe pas à proprement parler au niveau de l'équipement CPE1, durant l'étape F140 l'équipement CPE1 ne fournit aucun contenu à l'équipement CPE4, autrement dit, l'équipement CPE4 télécharge un contenu vide, de sorte que de son point de vue, l'exécution du téléchargement peut être considérée comme un échec.

Suite à la réception du message 200 OK de l'équipement CPE1, l'équipement CPE4 envoie une confirmation « Transfer Complete » de l'exécution du téléchargement à son dispositif de gestion ACS4 (étape F150). Il peut reporter par exemple dans cette confirmation l'échec du téléchargement.

Par ailleurs, la requête Get envoyée par l'équipement CPE1 sur l'adresse URL1 déclenche en réponse, conformément au mode de fonctionnement des équipements implémentant le protocole CWMP, l'initiation par l'équipement CPE1 d'une connexion avec son dispositif de gestion ACS1 en vue d'établir une session de gestion entre eux (étape F170). L'équipement CPE1 envoie notamment à cet effet un message Inform à son dispositif de gestion ACS1 contenant l'événement EVENT=ConnectionRequest.

Suite à l'initiation de cette connexion une session de gestion est établie entre l'équipement CPE1 et le dispositif de gestion ACS1, permettant à celui-ci d'effectuer les opérations de mise à jour ou autre souhaitées par le fournisseur de services PROV.

On note, que dans le mode de réalisation décrit ici, tous les équipements CPE1-CPE4 du réseau R1 sont gérés par des dispositifs de gestion distincts ACS1-ACS4. Toutefois, dans un autre mode de réalisation on peut envisager qu'un même dispositif de gestion gère plusieurs équipements à la fois. Par exemple, on peut envisager qu'un même dispositif de gestion gère l'équipement CPE1 et l'équipement CPE4 facilitant ainsi l'accès aux informations requises pour mettre en œuvre l'invention (URL de l'équipement CPE1, informations d'authentification, etc.).

Par ailleurs, dans le mode de réalisation décrit ici, les équipements CPE1, CPE2 et CPE3 ne sont pas joignables par leurs dispositifs de gestion en raison de la présence d'un dispositif de traduction d'adresses au niveau de la passerelle CPE4 et ils n'implémentent pas de mécanisme de traversée de NAT. Ces hypothèses ne sont toutefois pas limitatives, et l'invention peut s'appliquer dans d'autres contextes où ces équipements ne sont pas joignables. Par exemple, la passerelle CPE4 peut intégrer un dispositif de sécurité limitant l'accès au réseau R1 tel qu'un dispositif pare-feu (ou « firewall » en anglais) apte à bloquer l'accès au réseau R1, aux messages non sollicités par les équipements de ce réseau en particulier. Selon un autre exemple, les équipements CPE1, CPE2 et CPE3 peuvent implémenter des mécanismes de traversée de NAT, mais la passerelle CPE4 elle, ne met pas en œuvre un tel mécanisme.

Dans le mode de réalisation décrit ici, le procédé d'établissement selon l'invention s'appuie sur la passerelle CPE4 et sur son dispositif de gestion ACS4 du fait que par sa fonction, la passerelle CPE4 est joignable depuis le réseau R2 dans lequel se trouve le dispositif de gestion ACS4. Toutefois, l'invention peut être mise en œuvre à partir d'un autre équipement du réseau R1 que la passerelle CPE4 (et du dispositif de gestion administrant cet équipement) dès lors que celui-ci est joignable depuis le réseau R2. Notamment, l'invention peut être mise en œuvre à partir de l'équipement CPE2 par exemple si celui-ci met en œuvre un mécanisme de traversée de NAT tel que celui proposé dans l'annexe F du document D1 décrivant le protocole CWMP, ou tel que les solutions proposées dans les protocoles UPnP IGD (Internet Gateway Device) ou XMPP (Extensible Messaging and Presence Protocol), connus de l'état de l'art.

Ce mode de réalisation alternatif peut être particulièrement avantageux lorsque pour diverses raisons, la passerelle d'accès CPE4 n'est pas joignable depuis le réseau R2. Elle pourrait par exemple être sous le contrôle d'un autre opérateur que l'opérateur du réseau R2, ou il pourrait y avoir une entité NAT entre la passerelle CPE4 et son dispositif de gestion ACS4 (aussi appelé CGN pour Carrier-Grade NAT). Une telle configuration est utilisée parfois aujourd'hui lorsque le réseau utilise un mode d'adressage IPv4 et qu'il n'y a pas assez d'adresses.

On note par ailleurs que l'invention a été décrite en référence au protocole CWMP. Toutefois elle s'applique également à d'autres protocoles de gestion d'équipements à distance fonctionnant de façon similaire à CWMP (sessions à l'initiative des équipements, publication d'une adresse de connexion pour déclencher une connexion de l'équipement à son serveur d'administration, etc.) et notamment à des protocoles propriétaires. Elle trouve une application privilégiée dans les protocoles s'appuyant sur le protocole http et définissant déjà des méthodes de type Download ou Get telles que celles utilisées par le protocole CWMP.

## Revendications

1. Procédé d'établissement d'une session de gestion entre un premier équipement (CPE1) appartenant à un premier réseau de communication (R1) et un premier dispositif de gestion (ACS1) du premier équipement appartenant à un second réseau de communication (R2) distinct du premier réseau de communication, ce procédé comprenant :
- une étape d'établissement (F70) d'une session de gestion entre un second équipement (CPE2, CPE4) du premier réseau, joignable depuis le second réseau, et un second dispositif de gestion (ACS2, ACS4) de ce second équipement appartenant au second réseau ;
- une étape d'envoi (F80) par le second dispositif de gestion au second équipement, au cours de la session de gestion établie, d'une requête demandant au second équipement de télécharger un contenu à une adresse (URL1) fournie par le premier équipement pour établir une session de gestion avec ce premier équipement ;
- une étape d'exécution (F110) de la demande de téléchargement par le second équipement ; et
- en réponse à cette étape d'exécution, une étape d'initiation (F170) d'une connexion par le premier équipement avec le premier dispositif de gestion en vue d'établir une session de gestion entre le premier équipement et le premier dispositif de gestion.

2. Procédé d'établissement selon la revendication 1 dans lequel la requête envoyée par le second dispositif de gestion au second équipement comprend en outre des informations d'authentification (ID,PWD) auprès du premier équipement, ces informations étant utilisées par le second équipement au cours de l'étape d'exécution.

3. Procédé d'établissement selon la revendication 1 ou 2 dans lequel le premier dispositif de gestion (ACS1) et le second dispositif de gestion (ACS2, ACS4) sont un même dispositif de gestion.

4. Procédé d'établissement selon l'une quelconque des revendications 1 à 3 comprenant en outre une étape d'identification (F40) du second équipement auquel est envoyée la requête à partir d'une information transmise par le premier équipement.

5. Procédé d'établissement selon l'une quelconque des revendications 1 à 4 comprenant en outre une étape préalable de détection que le premier équipement n'est pas joignable directement par le premier dispositif de gestion, cette étape de détection déclenchant la mise en œuvre des étapes d'établissement d'une session de gestion entre le second équipement et le second dispositif de gestion, et d'envoi d'une requête par le second dispositif de gestion au second équipement.

6. Procédé de gestion d'un équipement (CPE2, CPE4), dit second équipement, appartenant à un premier réseau de communication (R1) et joignable depuis un second réseau de communication (R2), ce procédé de gestion étant destiné à être mis en œuvre par un dispositif de gestion (ACS2, ACS4) du second équipement, dit second dispositif de gestion, et appartenant au second réseau, le procédé de gestion comprenant :
- une étape d'obtention d'une adresse (URL1) fournie par un équipement du premier réseau, dit premier équipement, permettant d'établir une session de gestion avec ce premier équipement ;
- une étape d'établissement (F70) d'une session de gestion avec le second équipement ;
- une étape d'envoi (F80) au second équipement, au cours de la session de gestion établie, d'une requête demandant au second équipement de télécharger un contenu à ladite adresse.

7. Programme d'ordinateur (PROG-ACS,PROG-INT) comportant des instructions pour l'exécution des étapes du procédé de gestion selon la revendication 6 lorsque ledit programme est exécuté par un ordinateur.

8. Support d'enregistrement lisible par un ordinateur sur lequel est enregistré un programme d'ordinateur selon la revendication 7 comprenant des instructions pour l'exécution des étapes du procédé de gestion selon la revendication 6.

9. Dispositif de gestion (ACS2, ACS4) d'un équipement (CPE2, CPE4), dit second équipement, appartenant à un premier réseau de communication et joignable depuis un second réseau de communication, ledit dispositif de gestion du second équipement appartenant au second réseau et comprenant :
- un module d'obtention, configuré pour obtenir une adresse (URL1) fournie par un équipement du premier réseau, dit premier équipement, permettant d'établir une session de gestion avec ce premier équipement ;
- un module d'établissement, configuré pour établir une session de gestion avec le second équipement ; et
- un module d'envoi, configuré pour envoyer au second équipement, au cours de la session de gestion établie, une requête demandant au second équipement de télécharger un contenu à ladite adresse.

10. Système de communication (1) comprenant :
- un premier équipement (CPE1) appartenant à un premier réseau de communication ;
- un premier dispositif de gestion (ACS1) de ce premier équipement appartenant à un second réseau de communication distinct du premier réseau ;
- un second équipement (CPE2, CPE4) appartenant au premier réseau et joignable depuis le second réseau ;
- un second dispositif de gestion (ACS2, ACS4) du second équipement conforme à la revendication 9 ;
ledit second équipement comprenant :
- un module d'établissement configuré pour établir une session de gestion avec le second dispositif de gestion ;
- un module de réception, apte à recevoir en provenance du dispositif de gestion, au cours de la session de gestion établie, une requête lui demandant de télécharger un contenu fictif à une adresse fournie par le premier équipement pour établir une session de gestion avec ce premier équipement ;
- un module d'exécution apte à exécuter la demande de téléchargement.

11. Système de communication (1) selon la revendication 10 dans lequel le second équipement est une passerelle d'accès (CPE2, CPE4) du premier réseau ou un équipement du premier réseau mettant en œuvre un mécanisme de traversée d'une entité de traduction d'adresses du premier réseau ou d'un dispositif de sécurité apte à contrôler l'accès au premier réseau.

## Patentansprüche

1. Verfahren zum Aufbau einer Managementsitzung zwischen einem ersten Ausrüstungsgegenstand (CPE1), der einem ersten Kommunikationsnetz (R1) angehört, und einer ersten Vorrichtung zum Management (ACS1) des ersten Ausrüstungsgegenstandes, die einem zweiten Kommunikationsnetz (R2) angehört, das vom ersten Kommunikationsnetz verschieden ist, wobei dieses Verfahren umfasst:
- einen Schritt des Aufbaus (F70) einer Managementsitzung zwischen einem zweiten Ausrüstungsgegenstand (CPE2, CPE4) des ersten Netzes, der vom zweiten Netz aus erreichbar ist, und einer zweiten Vorrichtung zum Management (ACS2, ACS4) dieses zweiten Ausrüstungsgegenstandes, die dem zweiten Netz angehört,
- einen Schritt des Sendens (F80), durch die zweite Managementvorrichtung an den zweiten Ausrüstungsgegenstand während der aufgebauten Managementsitzung, einer Anforderung, die den zweiten Ausrüstungsgegenstand auffordert, einen Inhalt an eine von dem ersten Ausrüstungsgegenstand gelieferte Adresse (URL1) herunterzuladen, um eine Managementsitzung mit diesem ersten Ausrüstungsgegenstand aufzubauen;
- einen Schritt der Ausführung (F110) der Aufforderung zum Herunterladen durch den zweiten Ausrüstungsgegenstand; und
- als Antwort auf diesen Schritt der Ausführung, einen Schritt der Initiierung (F170) einer Verbindung durch den ersten Ausrüstungsgegenstand mit der ersten Managementvorrichtung zum Aufbauen einer Managementsitzung zwischen dem ersten Ausrüstungsgegenstand und der ersten Managementvorrichtung.

2. Verfahren zum Aufbau nach Anspruch 1, wobei die Anforderung, die von der zweiten Managementvorrichtung an den zweiten Ausrüstungsgegenstand gesendet wird, außerdem Informationen zur Authentifizierung (ID, PWD) beim ersten Ausrüstungsgegenstand umfasst, wobei diese Informationen von dem zweiten Ausrüstungsgegenstand im Schritt der Ausführung verwendet werden.

3. Verfahren zum Aufbau nach Anspruch 1 oder 2, wobei die erste Managementvorrichtung (ACS1) und die zweite Managementvorrichtung (ACS2, ACS4) ein und dieselbe Managementvorrichtung sind.

4. Verfahren zum Aufbau nach einem der Ansprüche 1 bis 3, welches außerdem einen Schritt der Identifizierung (F40) des zweiten Ausrüstungsgegenstandes, an den die Anforderung gesendet wird, anhand einer vom ersten Ausrüstungsgegenstand übertragenen Information umfasst.

5. Verfahren zum Aufbau nach einem der Ansprüche 1 bis 4, welches außerdem einen vorausgehenden Schritt der Erkennung, dass der erste Ausrüstungsgegenstand nicht direkt erreichbar ist, durch die erste Managementvorrichtung umfasst, wobei dieser Schritt der Erkennung die Durchführung der Schritte des Aufbaus einer Managementsitzung zwischen dem zweiten Ausrüstungsgegenstand und der zweiten Managementvorrichtung und des Sendens einer Anforderung durch die zweite Managementvorrichtung an den zweiten Ausrüstungsgegenstand auslöst.

6. Verfahren zum Management eines Ausrüstungsgegenstandes (CPE2, CPE4), zweiter Ausrüstungsgegenstand genannt, der einem ersten Kommunikationsnetz (R1) angehört und von einem zweiten Kommunikationsnetz (R2) aus erreichbar ist, wobei dieses Managementverfahren dazu bestimmt ist, von einer Vorrichtung zum Management (ACS2, ACS4) des zweiten Ausrüstungsgegenstandes, zweite Managementvorrichtung genannt, die dem zweiten Netz angehört, durchgeführt zu werden, wobei das Managementverfahren umfasst:
- einen Schritt der Gewinnung einer Adresse (URL1), die von einem Ausrüstungsgegenstand des ersten Netzes, erster Ausrüstungsgegenstand genannt, geliefert wird und ermöglicht, eine Managementsitzung mit diesem ersten Ausrüstungsgegenstand aufzubauen;
- einen Schritt des Aufbaus (F70) einer Managementsitzung mit dem zweiten Ausrüstungsgegenstand;
- einen Schritt des Sendens (F80), an den zweiten Ausrüstungsgegenstand während der aufgebauten Managementsitzung, einer Anforderung, die den zweiten Ausrüstungsgegenstand auffordert, einen Inhalt an die Adresse herunterzuladen.

7. Computerprogramm (PROG-ACS, PROG-INT), welches Anweisungen zur Ausführung der Schritte des Managementverfahrens nach Anspruch 6, wenn das Programm von einem Computer ausgeführt wird, umfasst.

8. Computerlesbares Aufzeichnungsmedium, auf dem ein Computerprogramm nach Anspruch 7 aufgezeichnet ist, das Anweisungen zur Ausführung der Schritte des Managementverfahrens nach Anspruch 6 umfasst.

9. Vorrichtung zum Management (ACS2, ACS4) eines Ausrüstungsgegenstandes (CPE2, CPE4), zweiter Ausrüstungsgegenstand genannt, der einem ersten Kommunikationsnetz angehört und von einem zweiten Kommunikationsnetz aus erreichbar ist, wobei die Vorrichtung zum Management des zweiten Ausrüstungsgegenstandes dem zweiten Netz angehört und umfasst:
- ein Gewinnungsmodul, das dafür ausgelegt ist, eine Adresse (URL1) zu gewinnen, die von einem Ausrüstungsgegenstand des ersten Netzes, erster Ausrüstungsgegenstand genannt, geliefert wird und ermöglicht, eine Managementsitzung mit diesem ersten Ausrüstungsgegenstand aufzubauen;
- ein Aufbaumodul, das dafür ausgelegt ist, eine Managementsitzung mit dem zweiten Ausrüstungsgegenstand aufzubauen; und
- ein Sendemodul, das dafür ausgelegt ist, an den zweiten Ausrüstungsgegenstand während der aufgebauten Managementsitzung eine Anforderung zu senden, die den zweiten Ausrüstungsgegenstand auffordert, einen Inhalt an die Adresse herunterzuladen.

10. Kommunikationssystem (1), welches umfasst:
- einen ersten Ausrüstungsgegenstand (CPE1), der einem ersten Kommunikationsnetz angehört;
- eine erste Vorrichtung zum Management (ACS1) dieses ersten Ausrüstungsgegenstandes, die einem zweiten Kommunikationsnetz angehört, das vom ersten Kommunikationsnetz verschieden ist;
- einen zweiten Ausrüstungsgegenstand (CPE2, CPE4), der dem ersten Netz angehört und vom zweiten Netz aus erreichbar ist;
- eine zweite Vorrichtung zum Management (ACS2, ACS4) des zweiten Ausrüstungsgegenstandes gemäß Anspruch 9;
wobei der zweite Ausrüstungsgegenstand umfasst:
- ein Aufbaumodul, das dafür ausgelegt ist, eine Managementsitzung mit der zweiten Managementvorrichtung aufzubauen;
- ein Empfangsmodul, das geeignet ist, von der Managementvorrichtung während der aufgebauten Managementsitzung eine Anforderung zu empfangen, die es auffordert, einen fiktiven Inhalt an eine von dem ersten Ausrüstungsgegenstand gelieferte Adresse herunterzuladen, um eine Managementsitzung mit diesem ersten Ausrüstungsgegenstand aufzubauen;
- ein Ausführungsmodul, das geeignet ist, die Aufforderung zum Herunterladen auszuführen.

11. Kommunikationssystem (1) nach Anspruch 10, wobei der zweite Ausrüstungsgegenstand ein Zugangsgateway (CPE2, CPE4) des ersten Netzes ist, oder ein Ausrüstungsgegenstand des ersten Netzes, der einen Mechanismus zur Durchquerung einer Adressübersetzungseinheit des ersten Netzes oder einer Sicherheitsvorrichtung, die in der Lage ist, den Zugang zum ersten Netz zu kontrollieren, einsetzt.

## Claims

1. Method for setting up a management session between a first equipment (CPE1), which belongs to a first communication network (R1), and a first management device (ACS1) for managing the first equipment, which management device belongs to a second communication network (R2) separate from the first communication network, this method comprising:
- a step (F70) of setting up a management session between a second equipment (CPE2, CPE4) of the first network, which second equipment can be reached from the second network, and a second management device (ACS2, ACS4) for managing this second equipment, which management device belongs to the second network;
- a step (F80) of the second management device sending the second equipment a request during the management session that has been set up, said request asking the second equipment to upload an item of content to an address (URL1) provided by the first equipment in order to set up a management session with this first equipment;
- a step (F110) of the second equipment executing the upload request; and,
- in response to this execution step, a step (F170) of the first equipment initiating a connection to the first management device with a view to setting up a management session between the first equipment and the first management device.

2. Set-up method according to Claim 1, wherein the request sent by the second management device to the second equipment furthermore comprises items of authentication information (ID, PWD) for authentication with the first equipment, these items of information being used by the second equipment during the execution step.

3. Set-up method according to Claim 1 or 2, wherein the first management device (ACS1) and the second management device (ACS2, ACS4) are the same management device.

4. Set-up method according to any one of Claims 1 to 3, furthermore comprising a step (F40) of identifying the second equipment to which the request is sent on the basis of an item of information transmitted by the first equipment.

5. Set-up method according to any one of Claims 1 to 4, furthermore comprising a prior step of detecting that the first equipment cannot be reached directly by the first management device, this detection step triggering the implementation of the step of setting up a management session between the second equipment and the second management device and the step of the second management device sending a request to the second equipment.

6. Method for managing an equipment (CPE2, CPE4), known as the second equipment, which belongs to a first communication network (R1) and can be reached from a second communication network (R2), this management method being intended to be implemented by a management device (ACS2, ACS4) for managing the second equipment, known as the second management device, which management device belongs to the second network, the management method comprising:
- a step of obtaining an address (URL1) provided by an equipment of the first network, known as the first equipment, said address allowing a management session to be set up with this first equipment;
- a step (F70) of setting up a management session with the second equipment;
- a step (F80) of sending the second equipment a request during the management session that has been set up, said request asking the second equipment to upload an item of content to said address.

7. Computer program (PROG-ACS, PROG-INT) including instructions for executing the steps of the management method according to Claim 6 when said program is executed by a computer.

8. Computer-readable recording medium on which is recorded a computer program according to Claim 7 comprising instructions for executing the steps of the management method according to Claim 6.

9. Management device (ACS2, ACS4) for managing an equipment (CPE2, CPE4), known as the second equipment, which belongs to a first communication network and can be reached from a second communication network, said management device for managing the second equipment belonging to the second network and comprising:
- an obtaining module configured to obtain an address (URL1) provided by an equipment of the first network, known as the first equipment, said address allowing a management session to be set up with this first equipment;
- a set-up module configured to set up a management session with the second equipment; and
- a sending module configured to send the second equipment a request during the management session that has been set up, said request asking the second equipment to upload an item of content to said address.

10. Communication system (1) comprising:
- a first equipment (CPE1), which belongs to a first communication network;
- a first management device (ACS1) for managing this first equipment, which management device belongs to a second communication network separate from the first network;
- a second equipment (CPE2, CPE4), which belongs to the first network and can be reached from the second network;
- a second management device (ACS2, ACS4) for managing the second equipment according to Claim 9;
said second equipment comprising:
- a set-up module configured to set up a management session with the second management device;
- a receiving module capable of receiving a request from the management device during the management session that has been set up, said request asking said second equipment to upload a notional item of content to an address provided by the first equipment in order to set up a management session with this first equipment;
- an execution module capable of executing the upload request.

11. Communication system (1) according to Claim 10, wherein the second equipment is an access gateway (CPE2, CPE4) of the first network or an equipment of the first network that implements a mechanism for traversing an address translation unit of the first network or for traversing a security device capable of controlling access to the first network.
